Europäisches Patentamt

European Patent Office

Office européen des brevets

(19)

(11) Publication number: **0 383 411**
**A2**

(12) **EUROPEAN PATENT APPLICATION**

(21) Application number: **90200383.9**

(22) Date of filing: **19.02.90**

(51) Int. Cl.⁵: **F16B 15/00, E04B 1/49**

(30) Priority: **17.02.89 NL 8900400**

(43) Date of publication of application:
**22.08.90 Bulletin 90/34**

(84) Designated Contracting States:
**AT BE CH DE DK ES FR GB GR IT LI LU NL SE**

(71) Applicant: **VAN HOORN EXPLOITATIE MAATSCHAPPIJ B.V.**
**Molshoek 11**
**NL-3220 BB Hellevoetsluis(NL)**

(72) Inventor: **De Groot, Klaas Willem**
**Multatulistraat 1**
**NL-3220 AC Hellevoetsluis(NL)**

(74) Representative: **Hoorweg, Petrus Nicolaas et al**
**OCTROOIBUREAU ARNOLD & SIEDSMA**
**Sweelinckplein 1**
**NL-2517 GK The Hague(NL)**

(54) **Connector member.**

(57) A connector element consisting of a plate of material, for example steel plate, and a number of elongate portions cut from the plate according to a predetermined configuration and bent at an angle, wherein of the number of elongate portions, one group is bent to the one side of the plate and the remaining group to the other side and wherein the elongate portions in a group are placed relative to each other such that in each case two openings, from each of which the elongate portion is cut, lie symmetrically relative to an imaginary line, said elongate portions of the one group being turned through an angle relative to those of the other group.

FIG.9

FIG.10

# CONNECTOR ELEMENT

The invention relates to a connector element consisting of a plate of material, for example steel plate, and a number of elongate portions cut from the plate according to a predetermined configuration and bent at an angle.

Such connector elements, known in the trade as nail plates or tooth plates, are known in many different embodiments, particularly for connecting construction elements lying in line with each other. The teeth cut from the plate are thereby bending and shear loaded. Less known and more difficult to connect are those parts which come to lie on top of each other, wherein the connector element lies therebetween and the teeth or nails are tension loaded. The problem arising here is that the connector elements are in fact constructed from two nail or tooth plates mutually connected back to back by means of nails, spot welds and the like or which are "slid into one another". That is, the teeth of the one plate are carried through the hole of the other plate and subsequently into the construction element. Such known connector elements are of course heavy and expensive.

The invention has for its object to provide a new connector element wherein the above-mentioned drawback is obviated. The connector element according to the invention is distinguished in that, of the number of elongate portions, one group is bent to the one side of the plate and the remaining group to the other side.

For achieving an optimal "production" of teeth from the plate material it is recommended that the elongate portions in a group are placed relative to each other such that in each case two openings, from each of which the elongate portion is cut, lie symmetrically relative to an imaginary line.

In order to adapt the connector element to the grain direction of for example wooden construction parts it is further recommended according to the invention to arrange the elongate portions of the one group turned through an angle relative to those of the other group.

For optimal absorbing of a tensile strain it is advantageous to keep the distance between the base of the elongate portions of the one group equal to that of the other group, which as a result of the symmetrical arrangement moreover brings about a particularly favourable path of lines of force through intervening plate material.

In order to adapt the connector element to different thicknesses of construction parts for joining, the length of the elongate portions of the one group deviates according to the invention from that of the elongate portions of the other group.

The invention will be further elucidated in the figure description hereinafter of a number of embodiments.

In the drawing:

Fig. 1 shows a strip of plate material from which the elongate portions can be cut according to a predetermined configuration,

fig. 2 shows a perspective top view of a part of the connector element in finished state,

fig. 3 shows a perspective view corresponding with fig. 2 of an alternative embodiment of the connector element,

fig. 4 shows a top view of a strip of material with connector elements to be cut therefrom according to a third embodiment,

fig. 5 is a top view corresponding with fig. 4 of a fourth embodiment,

fig. 6, 7 and 8 each show a top view of three substantially round connector elements with radially directed elongate portions in differing numbers,

fig. 9 shows a top view corresponding with fig. 4 of an eighth connector element with inwardly directed elongate portions,

fig. 10 and 11 show respectively a side view and front view of a connector element after folding back of the elongate portions,

fig. 12 and 13 show respectively a side view and front view of a preferred embodiment of an elongate portion.

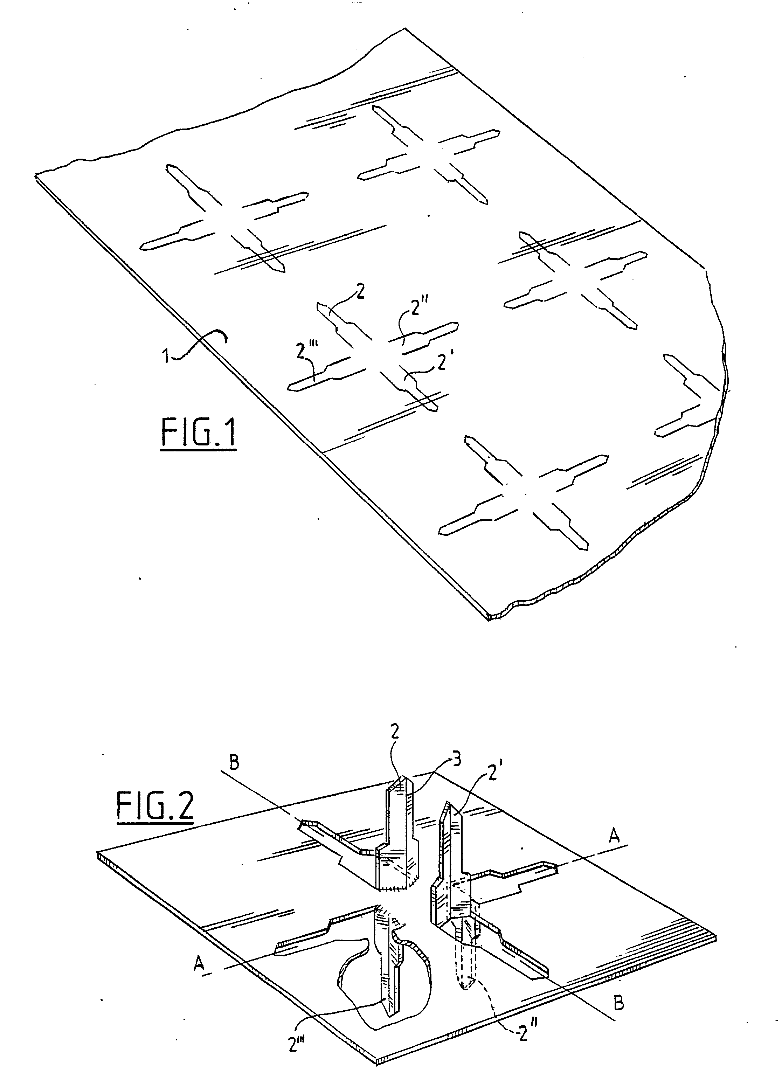

The strip or plate of material 1 shown in the figure can be of any suitable material but it is usually metal which allows for efficient cutting and bending. From such a plate 1 elongate portions 2 are cut in each case along an unclosed line and subsequently bent out along the side still forming a connection with the remaining plate material through a determined angle, usually an angle of or about $90°$, see fig. 2.

Before bending out the elongate portion 2 can moreover be slightly pressed out over the lengthwise direction along the line 3 so that a spine results, which has a stiffening effect on the elongate portion.

In addition the elongate portion can take a stepped form in the breadth along the length but within the framework of the invention it will be apparent that other embodiments are equally applicable.

It is to be noted that in each case the elongate portions are arranged in the configuration in groups of four, this such that the two oppositely located elongate portions 2 and 2' are bent upward, see fig. 2, while the portions 2" and 2'" are bent downward. Herewith is achieved a symmetrical disposition relative to two imaginary lines A-A and B-B which in this embodiment also form the heart lines of the elongate portions in the other group. Such a configuration gives the best path of lines of force in the remaining plate material extending between the teeth. It is the case that when there is tensile strain the tensile force will have to be transmitted from tooth 2 to 2″ and 2‴, and is distributed equally over the lower teeth through the symmetrical disposition.

Although in fig. 2 only a group of four teeth is drawn, it will be apparent that a connector element of larger dimensions may display groups of four elongate portions, as is indicated in fig. 1.

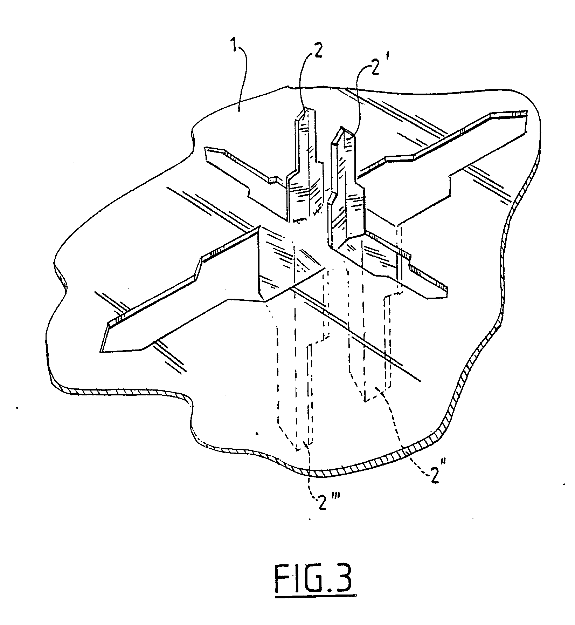

Fig. 3 shows an embodiment wherein the symmetrical arrangement according to fig. 2 is preserved but wherein the length of the upward bent portions 2 and 2″ is clearly smaller than that of the downward bent portions 2″ and 2‴. Such an embodiment offers advantages with construction parts which display a differing thickness or which are suitable for connecting construction parts consisting of layers, such as triplex and multiplex, chipboard or the like.

It is noted that the distance between the base of the small teeth deviates from that between the large teeth, this likewise to achieve the optimal path of force.

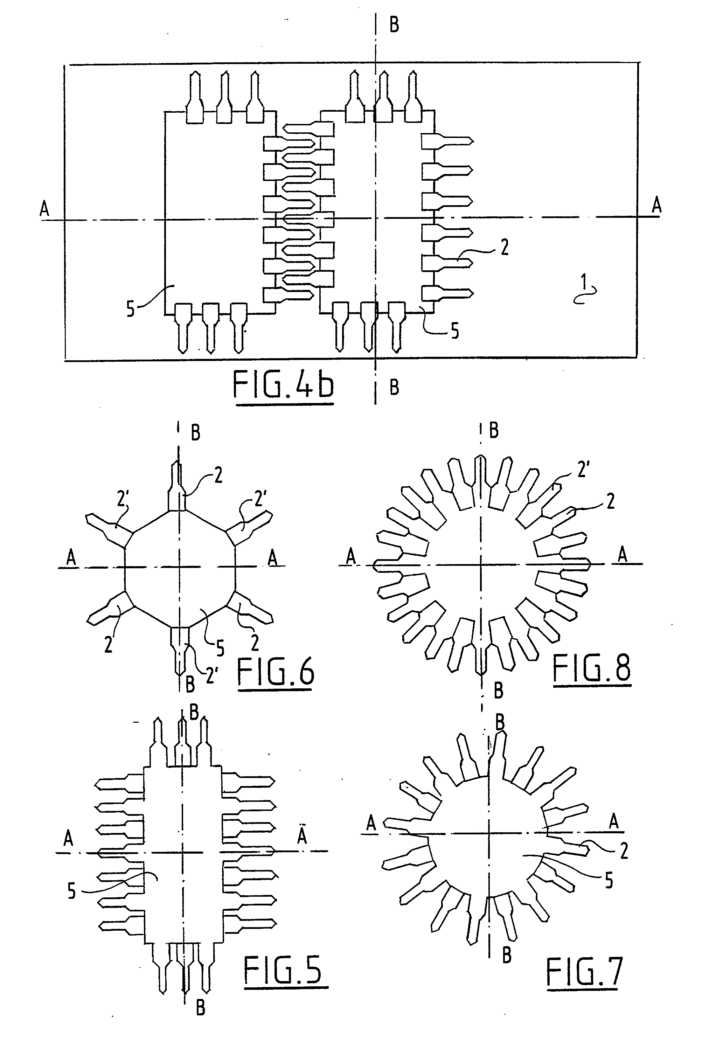

Fig. 4 shows a third embodiment wherein the connector elements to be cut from a strip of material 1 are provided with elongate portions 2 such that the adjacently situated connector elements 5 can thus come to lie close against each other, whereby there remains as little as possible plate material 1, which guarantees an optimal use of material. In the configuration shown the symmetry of the elongate portions relative to two imaginary lines is nevertheless preserved, see the lines A-A and B-B.

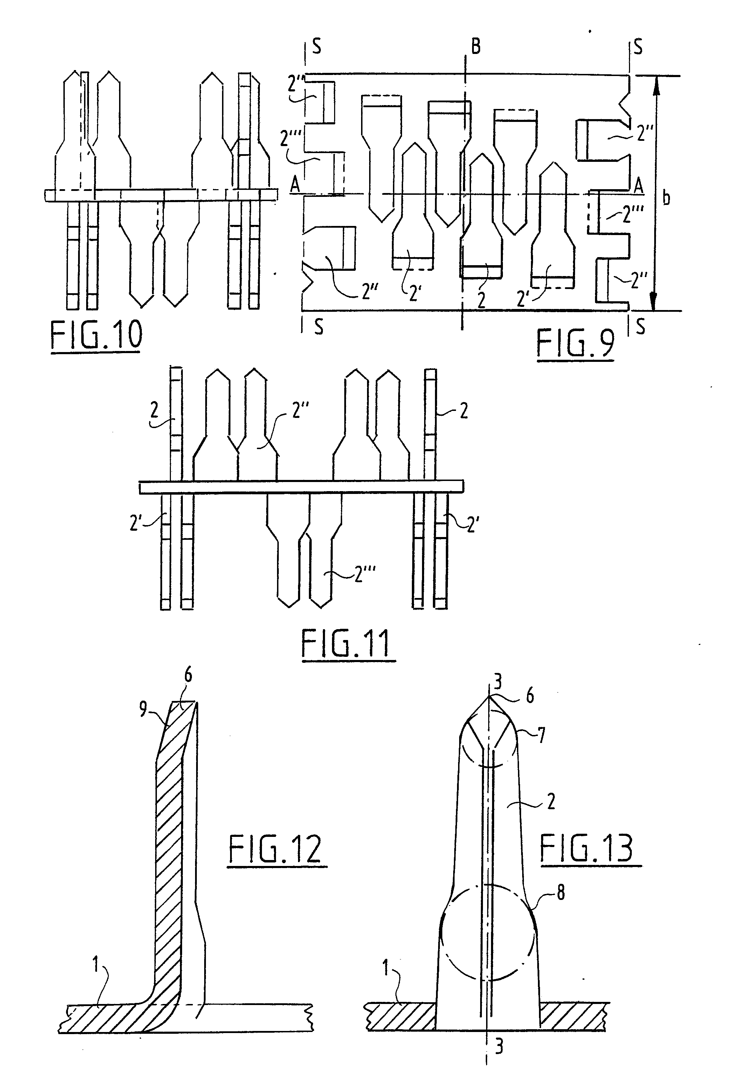

The connector element 5 is subsequently subjected to a bending action such that the elongate portions 2 alternately point upward and downward; which is further elucidated with reference to fig. 10.

Fig. 5 shows a connector element 5 cut from the plate material 1, the base whereof is substantially rectangular and along the peripheral edges whereof the elongate portions 2 extend. This in contrast to the embodiment according to fig. 4, wherein the elongate portions protrude partly into the rectangular body plate part of the connector element 5.

The figures 6, 7 and 8 show an embodiment wherein the body plate part of the connector element 5 has a substantially round shape.

In fig. 6 the round form is approximated by a polygonal plate, on each of the outer ends of which an elongate portion 2 extends radially. In this embodiment also the one elongate portion 2 will alternately point in another direction than the other portion 2′, thus ensuring once again a symmetrical disposition of the elongate portions 2, 2′ relative to the body plate of the connector element 5.

The embodiment shown in fig. 7 differs insofar as more elongate portions 2 are placed along the periphery of the body plate of the connector element 5. Here too there is a symmetrical arrangement relative to the imaginary lines A-A and B-B.

The embodiment according to fig. 8 has more elongate portions 7, wherein the broad portion of the elongate portions adjoining the body plate have a bounding line which is radially directed whereby the connector elements to be cut from a plate 1 can obtain an optimal number of adjacently situated elongate portions 2. Here too in each case the one elongate portion 2 and the one elongate portion 2′ will be bent alternately upward and downward respectively.

Fig. 9 shows an embodiment wherein an optimal use of material is applied. The strip of material 1 of determined breadth b is alternately provided with a group of elongate elements 2 (here 6) the narrow parts of which fall between each other, whereby the breadth b can remain limited. Subsequently cut in another part of the plate are elongate portions 2″ extending in each case in lengthwise direction, the narrow parts of which are likewise interspaced. After the upward and downward bending of the elongate portions 2 and 2′ respectively, a cutting line s can in each case be arranged transversely over the strip of material 1 to separate a connector element according to figs. 10 and 11.

It is further noted that the elongate elements 2, 2′ and 2″ are staggered such that during the final outward bending of the elongate elements these will not damage the grain structure of the wooden parts for joining.

It is finally remarked that in this embodiment a symmetrical arrangement relative to the imaginary lines A-A and B-B of the elongate elements 2 is also ensured. A uniform transmission of forces between the elements to be connected is hereby ensured, wherein it is furthermore noted that the number of elongate elements pointing upward and downward is equal.

In addition it is noted that in the embodiment shown in fig. 10 and 11, as seen in lengthwise direction, the number of elongate elements pointing upward differs from that number pointing downward. The desired equal number can of course also be achieved through a uniform alternation of upwardly and downwardly bent elongate elements.

Fig. 12 and 13 show a preferred embodiment of an elongate element wherein as stated the elongate element is not only bent upward from the plate material 1 through a practically right angle α, but also that the elongate element is bent along the line 3-3 whereby a hollow tooth results.

This hollow tooth takes a pointed form at 6 on the end remote from the plate material 1 whereafter a smooth transition 7 takes place to the narrow portion of the elongate element. The transition between the narrow and broad portion of the element 2 is likewise smooth at 8, wherewith is assured that the penetration of the tooth into the material for joining, for example wood or plastic, takes place easily.

Because the tooth is also provided at the end 6 with a sloping surface 9 at the end 6 a force deviating from the angle $\alpha$ will be exerted on the tooth whereby it undergoes a deformation which depends on the resistance of the material and which obstructs the extraction of the tooth from the material for joining.

Other configurations and tooth forms are of course possible within the scope of the invention.

**Claims**

1. Connector element consisting of a plate of material, for example steel plate, and a number of elongate portions cut out of the plate according to a predetermined configuration and bent over at an angle, **characterized in that**, of a number of elongate portions, one group is bent to the one side of the plate and the remaining group to the other side.

2. Connector element as claimed in claim 1, **characterized in that** the elongate portions in a group are placed relative to each other such that in each case the openings from each of which the elongate portion is cut lie symmetrically relative to an imaginary line.

3. Connector element as claimed in claim 1 or 2, **characterized in that** the elongate portions of the one group stand turned through an angle relative to those of the other group.

4. Connector element as claimed in claims 1-3, **characterized in that** the angle is 90°.

5. Connector element as claimed in claims 1-4, **characterized in that** the distance between the base of the elongate portions of the one group differs from that of the other group.

6. Connector element as claimed in any of the foregoing claims, **characterized in that** the length of the elongate portions of the one group differs from that of the elongate portions of the other group.

7. Connector element as claimed in any of the foregoing claims, **characterized in that** the element displays a body plate having elongate elements arranged along the periphery.

8. Connector element as claimed in claim 7, **characterized in that** the body plate is rectangular.

9. Connector element as claimed in any of the claims 1-6, **characterized in that** the body plate is formed from a portion of strip-like material wherein at least one group of the elongate elements extends inward and the other group outward.

10. Connector element as claimed in any of the foregoing claims, **characterized in that** the elongate element consists of a broad portion adjoining the body plate which transposes smoothly into a narrowed portion with a point-shaped end.

FIG.1

FIG.2

FIG.3

FIG.4b

FIG.6

FIG.8

FIG.5

FIG.7

FIG.10

FIG.9

FIG.11

FIG.12

FIG.13